(19) **Europäisches Patentamt**
**European Patent Office**
**Office européen des brevets**

(11) **EP 2 202 909 A1**

(12) **EUROPÄISCHE PATENTANMELDUNG**

(43) Veröffentlichungstag:
**30.06.2010 Patentblatt 2010/26**

(51) Int Cl.:
*H04L 7/02* (2006.01)     *H04L 7/04* (2006.01)
*H04L 7/00* (2006.01)     *H04W 64/00* (2009.01)

(21) Anmeldenummer: **09015928.6**

(22) Anmeldetag: **23.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **29.12.2008 DE 102008063301**

(71) Anmelder: **Deutsches Zentrum für Luft- und Raumfahrt e.V. (DLR)**
**51147 Köln (DE)**

(72) Erfinder:
• **Sand, Stephan**
**82211 Herrsching (DE)**

• **Mensing, Christian**
**80469 München (DE)**
• **Raulefs, Ronald**
**80538 München (DE)**

(74) Vertreter: **Rasch, Michael**
**Rösler & Schick**
**Bodenseestr. 18**
**81241 München (DE)**

Bemerkungen:
Geänderte Patentansprüche gemäss Regel 137(2) EPÜ.

(54) **Verfahren zur Synchronisation eines Empfängers auf einen Sender in einem digitalen Funknetzwerk**

(57) Die Erfindung beschreibt ein Verfahren zur Synchronisation eines Empfängers (E) auf einen Sender (S) in einem digitalen Funknetzwerk, wobei der Empfänger (E) und/oder der Sender (S) in einem Übertragungsgebiet mobil sind, vom Sender (S) in zeitlichem Abstand $t_a(k)$ digitale Signale $Sig_s(k)$ mit einer Signallänge $t_p(k)$ an den Empfänger übermittelt werden, die jeweils ein bekanntes Synchronisationssignal $p(k)$ enthalten und nach dem Empfang im Empfänger als Digitalsignal $Sig_E(k)$ vorliegen, und im Digitalsignal $Sig_E(k)$ in einem jeweils bestimmten Abschnitt $A(k)$ eine Position $t_{Sync}(k)$ des Synchronisationssignals $p(k)$ gesucht wird, mit k = 1,2,3,...,. Das Verfahren zeichnet sich dadurch aus, dass der Abschnitt $A(k+1)$ abhängig von der im k-ten Digitalsignal $Sig_E(k)$ ermittelten Position $t_{sync}(k)$ des Synchronisationssignals $p(k)$, sowie vergangenen, aktuellen und/oder prädizierten zukünftigen Orten des Senders (S) und des Empfängers (E) oder daraus abgeleiteten Größen bestimmt wird.

Fig. 3

EP 2 202 909 A1

**Beschreibung**

Die Erfindung liegt auf dem Gebiet der Signal- und Nachrichtenübertragung und betrifft ein Verfahren zur Synchronisation eines Empfängers auf einen Sender in einem digitalen Funknetzwerk, wobei der Empfänger und/oder der Sender in einem Übertragungsgebiet mobil sind, vom Sender in zeitlichem Abstand $t_a(k)$ digitale Signale $Sig_S(k)$ mit einer Signallänge $t_p(k)$ an den Empfänger übermittelt werden, die jeweils ein bekanntes Synchronisationssignal $p(k)$ enthalten und nach dem Empfang im Empfänger als Digitalsignal $Sig_E(k)$ vorliegen, und im Digitalsignal $Sig_E(k)$ in einem jeweils bestimmten Abschnitt $A(k)$ eine Position $t_{Sync}(k)$ des Synchronisationssignals $p(k)$ gesucht wird, mit k = 1,2,3,....

Bevorzugte Anwendungsgebiete des Verfahrens sind der Mobilfunk, die Satellitenkommunikation, die Kommunikation im Luftverkehr, die TV-Übertragungstechnik sowie alle drahtlosen Übertragungssysteme (WLAN, WMAN, WPAN, etc.), die im Empfänger eine Synchronisation auf ein Sendesignal ausführen müssen, um die darin enthaltene Daten weiterverarbeiten zu können. Weiterhin kann das Verfahren vorteilhaft in Übertragungssystemen eingesetzt werden, bei denen mit Empfangsdaten zu unterschiedlichen Zeiten gerechnet werden muss, bspw. durch verschiedene Signallaufzeiten aufgrund unterschiedlicher Übertragungswege bzw. Übertragungsphasen.

Es ist im Stand der Technik bekannt, dass in Funkübertragungsnetzwerken zu übertragende digitale Informationen im Sender mittels eines Multiplexers zunächst zu digitalen Signalen $Sig_S(k)$ zusammengefasst werden, wobei ein digitales Signal $Sig_S(k)$ eine festgelegte Rahmenstruktur (engl. Frame) aufweist. Jeder Frame umfasst typischerweise neben digitalen Daten ein oder mehrere digitale Zusatzinformationen, die für eine Abwicklung der Funkübertragung notwendig sind. Den Daten sowie den Zusatzinformationen ist im Frame jeweils eine bestimmte fixe Position (Slot) zugewiesen.

Jedes digitale Signal $Sig_S(k)$ wird im Sender zur Übertragung in ein analoges Sendesignal umgewandelt und schließlich über ein oder mehrere Antennen abgestrahlt. Typischerweise werden die Sendesignale in einer bekannten zeitlichen Abfolge, zumeist zeitlich direkt aufeinander folgend vom Sender, ausgesendet.

Damit ein Empfänger die empfangenen Sendesignale auswerten und weiterverarbeiten kann, werden diese im Empfänger zunächst digitalisiert. Damit liegen im Empfänger empfangene digitalisierte Signale SigE(k) als digitaler Datenstrom vor. Nun muss in dem digitalen Datenstrom erkannt werden, an welcher Position ein Signal SigE(k) in dem digitalen Datenstrom beginnt bzw. zu welchem Empfangszeitpunkt ein Signal $Sig_E(k)$ beginnt. Erst wenn dies bekannt ist, können aufgrund der im Empfänger bekannten Framestruktur, die im Frame enthaltenen Informationen gezielt ausgelesen und weiterverarbeitet werden. Hierzu muss der Empfänger und der Sender relativ zueinander synchronisiert werden.

Um eine solche Synchronisation zu ermöglichen, wird in den vom Sender ausgesandten Signalen $Sig_S(k)$ bspw. jeweils ein Synchronisationssignal $p(k)$ (Pilot) eingefügt, wobei das Synchronisationssignal und dessen Position im Frame dem Empfänger bekannt sind. In der Praxis werden pro Frame auch mehrere Synchronisationssignale eingefügt.

Für eine Anfangssynchronisation des Empfängers auf den Sender ist es erforderlich, in dem empfangenen digitalen Datenstrom das Synchronisationssignal p(k=1) eines empfangenen ersten Signals $Sig_E(k=1)$ zu ermitteln.

Hierzu sind im Stand der Technik Algorithmen bekannt, die bspw. auf einer Korrelationsanalyse basieren und die den empfangenen digitalen Datenstrom nach dem bekannten Synchronisationssignal durchsuchen. Derartige Synchronisations-Algorithmen sind jedoch sehr aufwendig und rechenzeitintensiv. Sie werden daher vorzugsweise nur zur Anfangssynchronisation im Rahmen von so genannten Akquisitions-Algorithmen eingesetzt. Anschließend kommen einfachere Synchronisations-Algorithmen zum Einsatz, die Informationen aus der Anfangssynchronisation bzw. der jeweils vorhergehenden aktuellen Synchronisation nutzen.

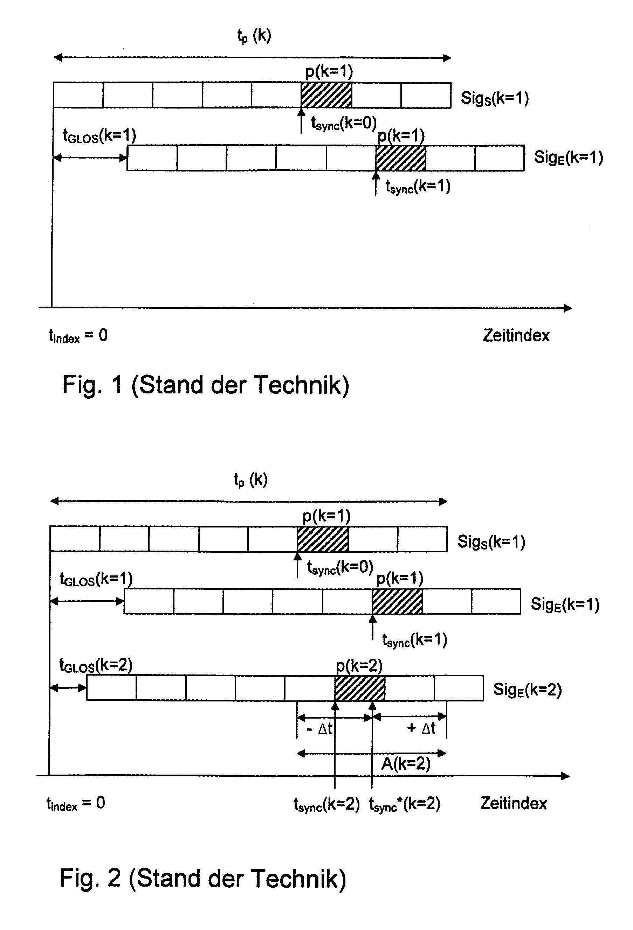

Zur Erläuterung des Standes der Technik wird nachfolgend anhand von **Fig.1** ein erster bekannter Synchronisations-Algorithmus und anhand von **Fig. 2** ein zweiter bekannter Synchronisationsalgorithmus beschrieben. Es wird dabei angenommen, dass ein Sender eine große Anzahl N von digitalen Signalen: $Sig_S(k=1,..., N)$ zeitlich unmittelbar hintereinander an den Empfänger übermittelt. Im Empfänger sollen die Signale $Sig_S(k=1,..., N)$ empfangen, ausgewertet und die enthaltenen Information (Daten) weiterverarbeitet werden.

**Fig. 1** (Stand der Technik) zeigt über einem Zeitindex aufgetragen ein vom Sender ausgesandtes erstes digitales Signal $Sig_S(k=1)$ (obere Kästchenreihe), das um eine Signallaufzeit $t_{GLOS}(k=1)$ versetzt (untere Kästchenreihe) vom Empfänger empfangen wird. Der Zeitindex bezieht die Empfangszeit jedes vom Empfänger empfangenen Signals $Sig_S(k)$, d.h. genauer die Empfangszeit des Signalanfangs, auf die Sendezeit desselben Signals beim Sender. In dieser Darstellung ergibt sich daher für jedes senderseitig ausgesandte Signal $Sig_S(k)$ dieselbe obere Kästchenreihe, insbesondere derselbe zeitliche Beginn $t_{index}= 0$ der Aussendung, während die Empfangszeiten beim Empfänger sich abhängig von der Signallaufzeit $t_{GLOS}(k)$ der einzelnen Signale $Sig_S(k)$ relativ zu $t_{index}= 0$ verschieben. Die Signallaufzeit ist die Zeit, die ein vom Sender ausgesandtes Signal benötigt bis es den Empfänger erreicht. Veränderte Signallaufzeiten entstehen, wenn sich Sender und Empfänger relativ zueinander bewegen, so dass sich die Distanz und/oder die Funkausbreitungsgegebenheiten zwischen Sender und Empfänger ändern. Unter Funkausbreitungsgegebenheiten sei bspw. der Umstand einer oder keiner Quasioptischen Sichtverbindung, eine Mehrwegeausbreitung, eine Änderung der Funkausbreitungsgeschwindigkeit etc. verstanden.

Das erste vom Sender ausgesandte Signal $Sig_S(k=1)$ hat vorliegend eine Signallänge $t_p(k=1)$ und besitzt eine Framestruktur mit acht Informations-Slots (in der Figur 1 durch die acht aneinander gefügten Kästchen angedeutet), wobei die Slots eins bis fünf, sieben und acht Daten enthalten. Die Signallänge sei vorliegend für alle k Signale $Sig_S(k)$ konstant: $t_p(k)$ = konstant. Der Slot sechs enthält ein Synchronisationssignal (Pilot), was durch das schraffierte Kästchen gekennzeichnet ist. Die Framestruktur sowie das Synchronisationssignal selbst sind dem Empfänger bekannt.

Im Empfänger wird das als analoges Signal empfangene erste Signal $Sig_S(k)$zunächst digitalisiert und liegt somit zunächst als Digitalsignal $Sig_E(k=1)$ vor. Mittels einer Korrelationsanalyse wird nun im Rahmen eines Akquisitions-Algorithmus das gesamte Digitalsignal $Sig_E(k=1$ nach dem bekannten Synchronisationssignal $p(k=1)$ durchsucht, und so die Position des Synchronisationssignals im Digitalsignal $Sig_E(k=1)$ und somit auch seine Empfangszeit $t_{sync}(k=1)$ ermittelt. Die Position/Empfangszeit der Synchronisationssignale $p(k)$ wird vorzugsweise auf den Beginn des Synchronisationssignals im digitalen Digitalsignal $Sig_E(k)$ bezogen. Damit kann vom Empfänger der Frameanfang im Digitalsignal $Sig_E(k=1)$ bestimmt und somit die darin enthaltenen Daten ausgelesen und weiterverarbeitet werden. Dieses Verfahren ist rechenzeitintensiv, da das Synchronisationssignal jeweils im gesamten Digitalsignal $Sig_E(k)$ gesucht werden muss.

Fig. 2 (Stand der Technik) unterscheidet sich von Fig.1 darin, dass für den Empfänger zusätzlich die zeitlichen Verhältnisse beim Empfang eines zweiten Signals $Sig_S(k=2)$ bzw. des sich daraus ergebenden Digitalsignals $Sig_E(k=2)$ (untere Kästchenreihe) dargestellt sind. Im Hinblick auf den Empfang des ersten Signals $Sig_S(k=1)$ wird auf die vorstehenden Ausführungen Bezug genommen. Für das zweite Signal $Sig_S(k=2)$ ergibt sich in Fig. 2 eine andere, kürzere Signallaufzeit $t_{GLOS}(k=2)$ als beim ersten Signal $Sig_S(k=1)$ (mittlere Kästchenreihe), so dass sich in der vorliegenden Zeitindexdarstellung ein geringerer Zeitversatz zu $t_{index}$ = 0 ergibt. Das Erkennen des Synchronisationssignals $p(k=1)$ im ersten Digitalsignal $Sig_E(k=1)$ erfolgt im Rahmen des zu Fig. 1 beschriebenen aufwendigen Akquisitions-Algorithmus. Als Ergebnis ist die Position $t_{sync}(k=1)$ des ersten Synchronisationssignals $p(k=1)$ im ersten Digitalsignal $Sig_E(k=1)$ bekannt.

Für das Erkennen des Synchronisationssignals $p(k=2)$ in dem zweiten Digitalsignal $Sig_E(k=2)$, wird im Stand der Technik zunächst ein Zeitpunkt bzw. eine Position/Zeitpunkt $t_{sync}*(k=2)$ gemäß:

$$t_{sync}*(k=2) \; = \; t_{sync}(k=1) \; + \; t_p$$

in dem zweiten Digitalsignal $Sig_E(k=2)$ bestimmt. Ausgehend von der Position/dem Zeitpunkt $t_{sync}*(k=2)$ und einem gegebenen konstanten Wert At wird nun ein Abschnitt

$$A(k=2) := [t_{sync}*(k=2) - \Delta t, \; t_{sync}*(k=2) + \Delta t]$$

im Digitalsignal $Sig_E(k=2)$ bestimmt, das symmetrisch um $t_{sync}*(k=2)$ angeordnet ist. Die Suche nach dem Synchronisationssignal $p(K=2)$ erfolgt dann nur noch in dem Abschnitt $A(k=2)$. Als Ergebnis der Suche wird die exakte Position/Zeitpunkt $t_{sync}(k=2)$ des Synchronisationssignals $p(k=2)$ im Digitalsignal $Sig_E(k=2)$ ermittelt. Es wird also lediglich in einem kleinen Abschnitt $A(k=2)$ nach dem Synchronisationssignal gesucht, was den Rechenaufwand erheblich reduziert.

Die Wahl des Wertes $\Delta t$, der für die Ausführung des Synchronisationsverfahrens im Stand der Technik konstant ist, beeinflusst die Schnelligkeit und die Zuverlässigkeit des vorstehenden beschriebenen Synchronisations-Algorithmus.

Wird für $\Delta t$ ein kleiner Wert gewählt, so ergibt sich zwar ein geringer Rechenaufwand und damit eine schnelle Synchronisation, allerdings führt dies auch zu einer geringeren Zuverlässigkeit des Synchronisations-Algorithmus, da bei zu kleinem Abschnitt $A(k)$ die Synchronisationssignale $p(k)$ auch vermehrt außerhalb der Intervalls liegen, so dass in diesem Fall eine aufwendige Synchronisation gemäß dem vorstehend beschriebenen Akquisitions-Algorithmus ausgeführt werden muss.

Wird für $\Delta t$ ein großer Wert gewählt, so ergibt umgekehrt ein höherer Rechenaufwand und entsprechende eine langsamere Synchronisation. Allerdings steigt die Zuverlässigkeit des Synchronisations-Algorithmus an, da die Fälle, in denen ein Synchronisationssignal außerhalb des Intervalls $I(k)$ auftritt, selten vorkommen. Die Wahl des Wertes für $\Delta t$ stellt somit einen Kompromiss zwischen der Schnelligkeit und der Zuverlässigkeit des Synchronisations-Algorithmus dar.

Nachteilig an den bekannten Synchronisationsverfahren ist, dass bei einer angestrebten hohen Zuverlässigkeit ein hoher Rechenaufwand erforderlich ist. Diese Nachteile treten insbesondere bei Funknetzwerken zu Tagen, in denen der Sender und/oder der Empfänger mobil sind.

Der Erfindung liegt die Aufgabe zugrunde, ein Synchronisationsverfahren anzugeben, das den Rechenaufwand bei gleichbleibender oder höherer Zuverlässigkeit der Synchronisation reduziert, und sich insbesondere für ein Funkübertragungsnetzwerk mit mobilen Sendern und/oder Empfängern eignet.

Erfindungsgemäß wird diese Aufgabe durch das in Anspruch 1 angegebene Verfahren gelöst. Vorteilhafte Weiterbildungen ergeben sich aus den Unteransprüchen, der Beschreibung, den Ausführungsbeispielen und den zugehörigen Figuren.

Das erfindungsgemäße Verfahren zur Synchronisation eines Empfängers auf einen Sender in einem digitalen Funknetzwerk geht davon aus, dass der Empfänger und/oder der Sender in einem Übertragungsgebiet mobil, d.h. ortsveränderlich sind. Unter dem Begriff "Übertragungsgebiet" wird derjenige Raumbereich verstanden, in dem ein vom Sender ausgesandtes Signal, über welchen Ausbreitungsweg auch immer, den Empfänger erreichen kann. Weiterhin geht das Verfahren davon aus, dass vom Sender in einem zeitlichen Abstand $t_a(k)$, vorzugsweise mit $t_a(k) = 0$ für alle k, Signale $Sig_S(k)$ mit einer Signallänge $t_p(k)$ an den Empfänger übermittelt werden, die jeweils ein bekanntes Synchronisationssignal p(k) enthalten. Der zeitliche Abstand ta(k) gibt mit anderen Worten den zeitlichen Abstand zwischen dem Ende des Signals $Sig_S(k-1)$ und dem Anfang des Signals $Sig_S(k)$ an. Die vom Empfänger empfangenen Signale $Sig_S$ (k) liegen im Empfänger schließlich als Digitalsignal $Sig_E(k)$ vor. Der Index k gibt vorliegend eine fortlaufende Nummerierung der vom Sender ausgesandten Signale $Sig_S(k)$an, bspw. ist das Signal $Sig_S(k=1)$ das erste vom Sender ausgesandte Signal. Sowohl der zeitliche Abstand $t_a(k)$ als auch die Signallänge $t_p(k)$ können variieren, soweit dies dem Empfänger bekannt ist. Sie sind jedoch vorzugsweise konstant. Das erfindungsgemäße Verfahren basiert weiterhin darauf, dass in dem Digitalsignal $Sig_E(k)$, in einem darin bestimmten Abschnitt A(k) eine Position $t_{sync}(k)$ des Synchronisationssignals p(k) ermittelt wird. Das Ermitteln des Synchronisationssignals p(k) erfolgt vorliegend vorzugsweise durch Korrelation des Digitalsignals $Sig_E(k)$ im Abschnitt A(k) mit dem bekannten Synchronisationssignal p(k).

Das erfindungsgemäße Verfahren zeichnet sich dadurch aus, dass für jedes (k= 1, 2, ... ,N) vom Sender an den Empfänger übermittelte Signal $Sig_S$ (k) ein aktueller Ort des Senders $r_S(k)$ und ein aktueller Ort des Empfängers $r_E$ (k) und/oder eine Anzahl $g_1$ von prädizierten zukünftigen Orten des Senders und des Empfängers: $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$, ermittelt werden. Die Orte werden vorliegend vorzugsweise in 2D- oder 3D-Koordinaten angegeben.

Vorzugsweise erfolgt das Ermitteln der aktuellen Orte des Senders und des Empfängers: $r_S(k)$, $r_E(k)$ auf Basis von im Sender und im Empfänger verfügbaren Satellitennavigationsdaten. Das Ermitteln der vergangenen, aktuellen und/oder prädizierten zukünftigen Orte erfolgt vorteilhafter Weise im Empfänger. Aktuelle Ortsdaten des Senders können bspw. im Rahmen der Signale $Sig_S(k)$ an den Empfänger übermittelt werden.

Die prädizierten zukünftigen Orte des Sender und/oder des Empfängers: $r_{Sp}(k+1)$, $r_{Sp}(k+2)$,..., $r_{Sp}(k+g_1)$ und $r_{Ep}(k+1)$, $r_{EP}(k+2)$,..., $r_{Ep}(k+g_1)$ werden vorzugsweise auf Basis der aktuellen sowie einer Anzahl $g_3$ bekannter vergangener Orte des Empfängers und des Senders: $r_S(k)$, $r_S(k-1)$, $rS(k-2)$,..., $r_S(k-g_3)$ und $r_E(k)$, $r_E(k-1)$, $r_E(k-2)$,..., $r_E(k-g_3)$ extrapoliert. Alternativ können die prädizierten zukünftigen Orte des Sender und/oder des Empfängers: $r_{Sp}(k+1)$, $r_{Sp}$ (k+2),..., $r_{Sp}(k+g_1)$ und $r_{Ep}(k+1)$, $r_{Ep}(k+2)$,..., $r_{Ep}(k+g_1)$ auf Basis bekannter in die Zukunft reichender Trajektorien des Empfängers und des Senders ermittelt werden. Derartige Trajektorien können vorteilhaft aus im Sender und/oder im Empfänger verfügbaren Navigations- oder Routendatendaten ermittelt werden. Unter einer Trajektorie wird vorliegend ein für die Zukunft im Voraus bestimmbarer Weg oder eine Bahnkurve verstanden, entlang derer sich der Sender bzw. der Empfänger bewegen werden.

Das erfindungsgemäße Verfahren zeichnet sich weiterhin dadurch aus, dass im Digitalsignal $Sig_E(k+1)$ der Abschnitt A(k+1) abhängig von der im Digitalsignal $Sig_E(k)$ ermittelten Position $t_{Sync}(k)$ des Synchronisationssignals p (k), und den aktuellen Orten des Senders und des Empfängers: $r_S(k)$ und $r_E(k)$ oder einer daraus abgeleiteten Größe, und/oder den prädizierten zukünftigen Orten des Senders und des Empfängers: $r_{Sp}(k+1)$, $r_{Sp}(k+2)$,..., $r_{Sp}(k+g_1)$ und $r_{Ep}$ (k+1), $r_{Ep}(k+2)$,..., $r_{Ep}(k+g_1)$ oder daraus abgeleiteten Größen, und/oder von einer Anzahl $g_2$ von vergangenen Orten des Senders und des Empfängers: $r_S(k-1)$, $r_S(k-2)$,..., $r_S(k-g_2)$ und $rE(k-1)$, $rE(k-2)$,..., $rE(k-g_2)$ oder daraus abgeleiteten Größen, bestimmt werden. Dieser Verfahrenschritt wird vorteilhafter Weise im Empfänger ausgeführt. Die Anzahl $g_2$ und die Anzahl $g_3$ beziehen sich somit auf unterschiedliche Prozesse. So bestimmt $g_2$ die Anzahl von vergangenen Orten des Senders bzw. des Empfängers, die zur Bestimmung des Abschnitts A(k+1) herangezogen werden, während $g_3$ die Anzahl von vergangenen Orten des Senders bzw. des Empfängers bestimmt, die zur Ermittlung der zukünftigen prädizierten Orte des Senders bzw. des Empfängers herangezogen werden. Die Größen $g_1$ und $g_2$ können denselben Wert aufweisen, müssen dies aber nicht.

Für das erste vom Empfänger E empfangene Signal $Sig_S(k=1)$ umfasst der Abschnitt A(k=1) in dem das Synchronisationssignal $p(k=1)$ gesucht wird, vorteilhafter Weise das gesamte erste Digitalsignal $Sig_E(k=1)$. Somit wird zu Beginn der Datenübertragung, zunächst im Rahmen eines Akquisitions-Algorithmus, der im Stand der Technik bekannte aufwendige, eingangs beschriebene Algorithmus ausgeführt.

In einer vorteilhaften Ausgestaltung des Verfahrens werden als abgeleitete Größe/Größen aus den ermittelten vergangenen, aktuellen und/oder prädizierten zukünftigen Orten des Senders S und des Empfänger E deren jeweilige Distanzen $d_{E,S} = |r_E - r_S|$ bei der Bestimmung des Abschnitts A(k+1) berücksichtigt. $r_E$ und $r_S$ geben hierbei jeweils vergangene, aktuelle oder prädizierte Orte an.

In einer besonders vorteilhaften Ausgestaltung des Verfahrens wird als abgeleitete Größe eine aus der jeweiligen Distanz $d_{E,S} = |r_E - r_S|$ ermittelte Signallaufzeit $t_{GLOS} = d_{E,S} / c$ zwischen Sender (S) und Empfänger (E) bei der Bestimmung des Abschnitts A(k+1) berücksichtigt, wobei c die Lichtgeschwindigkeit ist. Mit anderen Worten wird der Abschnitt A(k+1) im Digitalsignal $Sig_E$(k+1) unter Berücksichtigung von Signallaufzeiten $T_{GLOS} = d_{E,S} / c$ zwischen Sender und Empfänger für deren vergangene und/oder aktuelle und/oder prädizierte zukünftige Orte bestimmt.

Im Gegensatz zum Stand der Technik ist beim erfindungsgemäßen Verfahren der Abschnitt A(k+1), k = 1, ..., N in seiner Position und Länge variabel und wird für jedes Digitalsignal $Sig_E$(k+1) abhängig von der für das Digitalsignal $Sig_E$(k) ermittelten Position/Zeitpunkt $t_{Sync}$(k) des Synchronisationssignals p(k) sowie vergangener, aktueller und/oder vorhergesagter (prädizierter) zukünftiger Orte des Senders und des Empfängers optimiert. Es ist somit möglich, den Abschnitt A(k+1) abhängig von vergangenen und/oder aktuellen und/oder zukünftigen Orten möglichst klein, allerdings groß genug zu wählen, dass bspw. zu erwartende große Funklaufzeitänderungen aufgrund von prädizierten Orten berücksichtigt werden können.

Der Empfänger ist vorzugsweise in einem Mobiltelefon, einem Auto, einem Flugzeug, oder einem Satelliten angeordnet. Der Sender ist vorzugsweise stationär. Gerade in diesen Anwendungen unterliegt die Funkübermittlung selbst auch Einflüssen die zu Problemen bei der Synchronisation führen können.

In einer besonders bevorzugten Verfahrensvariante werden daher die Lage und/oder die Länge des Abschnitts A(k+1) in dem Digitalsignal $Sig_E$(k+1) abhängig von Funkausbreitungsgegebenheiten zwischen den für im Synchronisationsverfahren jeweils berücksichtigten, vergangenen, aktuellen und/oder prädizierten zukünftigen Orten des Senders S und des Empfänger E: $r_S$, $r_E$ ermittelt, wobei die Funkausbreitungsgegebenheiten für alle möglichen Orte des Senders S und des Empfängers E im Übertragungsgebiet bekannt und in einer Datenbank hinterlegt sind. Unter Funkausbreitungsgegebenheiten werden grundsätzlich alle Einflüsse und Einflussparameter verstanden, welche die Funkübertragung zwischen Sender und Empfänger beeinflussen können.

Vorzugsweise kann der Datenbank entnommen werden, ob im Übertragungsgebiet zwischen einem möglichen Ort des Senders S und einem möglichen Ort des Empfängers S eine quasioptische Sichtverbindung besteht oder nicht. Dies kann in der Datenbank bspw. mit einer 1-Bit Quantisierung (quasioptische Sichtverbindung vorhanden: LOS=1, keine quasioptische Sichtverbindung vorhanden: LOS=0) je Rasterpunkt im Übertragungsgebiet hinterlegt sein. Derartige Informationen zu quasioptischen Sichtverbindungen im Übertragungsgebiet können, bspw. auf Basis von Geländedatenmodellen ermittelt werden, die ggf. durch zusätzliche Messungen im realen Übertragungsgebiet ergänzt, verbessert oder verifiziert werden. Je nach Qualität und Auflösung der in der Datenbank hinterlegten Daten über das Bestehen oder Nichtbestehen einer quasioptischen Sichtverbindung zwischen verschiedenen Orten im Übertragungsgebiet, können bspw. auch Mehrwegübertragungen oder Gebäudeechos bspw. bei der Übertragung in Städten berücksichtigt werden.

Weiterhin kann in vorteilhafter Weise der Datenbank entnommen werden, welcher Wert der Lichtgeschwindigkeit c(k) für eine Funkausbreitung im Übertragungsgebiet zwischen einer möglichen Position des Senders S und einer möglichen Position des Empfängers E zugrunde zulegen ist. Dies ist insbesondere interessant für eine Funkkommunikation von der Erdoberfläche zu einem Empfänger in der Atmosphäre (bspw. zu Flugzeugen) oder im Weltraum (Satelliten etc.).Die Datenbank selbst ist in vorteilhafter Weise im Empfänger angeordnet und ist aktualisierbar.

Damit kann der Abschnitt A(k+1) zusätzlich abhängig von sich ändernden Funkausbreitungsgegebenheiten für sich ändernde Orte des Senders und des Empfängers (für vergangene, aktuelle und/oder prädizierte zukünftige Orte) bestimmt werden, was eine weitere Verbesserung des erfindungsgemäßen Verfahrens im Hinblick Reduktion der Rechenzeit und Verbesserung der Synchronisationszuverlässigkeit bzw. - genauigkeit bewirkt.

Vorzugsweise sind die für das Übertragungsgebiet in der Datenbank hinterlegten Funkausbreitungsgegebenheiten mit einer Auflösung angegeben, die einer Rasterung des Untersuchungsgebiets entsprechen. Typischerweise wird die Rasterung in Gebieten, wie in Städten oder im Gebirge eine höhere Auflösung als in ländlichen, ebenen Gebieten aufweisen. Die Rasterung kann somit im Übertragungsgebiet unterschiedlich sein.

In einer weitern besonders bevorzugten Ausführungsvariante des erfindungsgemäßen Verfahrens wird basierend auf dem bekannten zeitlichen Abstand $t_a$(k) der Signale $Sig_S$(k), der Signallänge $t_p$(k) und der im Digitalsignal $Sig_E$(k) ermittelten Position $t_{sync}$(k) des Synchronisationssignals p (k), eine Position $t_{sync}$*(k+1) im Digitalsignal $Sig_E$(k+1) bestimmt, wobei sich der Abschnitt A(k+1) im Digitalsignal $Sig_E$(k+1) aus zwei zu ermittelnden Werten $\Delta l_1$(k+1) und $\Delta l_2$(k+1) gemäß: A(k+1):= [$t_{sync}$*(k+1)- $\Delta l_1$(k+1), $t_{sync}$*(k+1)+ $\Delta l_2$(k+1)] ergibt. Vorzugsweise wird die Position $t_{sync}$*(k+1) gemäß $t_{sync}$*(k+1) = $t_{sync}$(k) + $t_p$(k) bestimmt, wobei unterstellt wird, dass der Sender das Signal $Sig_S$(k+1) direkt anschließend an das Signal $Sig_S$(k) aussendet.

In einer weiteren besonders bevorzugten Ausführungsvariante werden die Werte für $\Delta l_1$(k+1) und $\Delta l_2$(k+1) unter Berücksichtigung einer Auswertung von Funkausbreitungsgegebenheiten und Unterschieden von ermittelten Signallaufzeiten $t_{GLOS}$(k) für vergangene, aktuelle und/oder prädizierte zukünftige Positionen des Senders (S) und des Empfängers (E): $r_S$ und $r_E$ ermittelt. Für den Fall, dass das Synchronisationssignal p(k+1) nicht innerhalb des Abschnitts A(k+1) ermittelt werden kann, wird das Synchronisationssignal p(k+1) im gesamten Digitalsignal $Sig_E$(k+1) gesucht.

Nachfolgend wird ein Ausführungsbeispiel anhand von Figuren erläutert. Es zeigen:

**Fig. 1** schematische Darstellung zur Erläuterung eines ersten Synchronisations-Algorithmus (Stand der Technik),

**Fig. 2** schematische Darstellung zur Erläuterung eines zweiten Synchronisations-Algorithmus (Stand der Technik), und

**Fig. 3** schematische Darstellung zur Erläuterung einer Ausführungsvariante des erfindungsgemäßen Verfahrens.

**Fig.1** und **Fig. 2** zeigen jeweils eine schematische Darstellung von im Stand der Technik vorbekannten und bereits vorstehend erläuterten Synchronisations-Algorithmen. Auf die vorstehenden Ausführungen wird verwiesen.

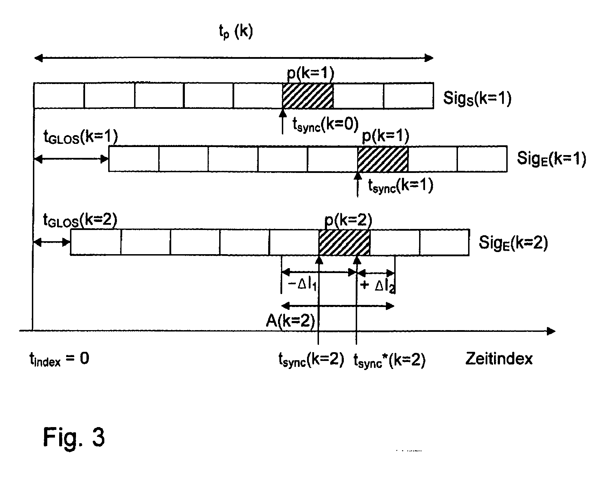

**Fig. 3** zeigt eine schematische Darstellung zur Erläuterung einer Ausführungsvariante des erfindungsgemäßen Verfahrens. Das vorliegende Synchronisationsverfahren unterscheidet sich von dem vorstehend in Fig. 2 erläuterten Synchronisationsverfahren dadurch, dass nunmehr der Abschnitt A(k+1) mittels der Werte $\Delta l_1$ und $\Delta l_2$ bestimmt wird, die ihrerseits von vergangenen, aktuellen und prädizierten zukünftigen Orten des Senders bzw. Empfängers sowie von Funkausbreitungsgegebenheiten zwischen jeweiligen Sender-und Empfängerorten abhängen. Insofern wird auch auf die vorstehenden Ausführungen zu Fig. 1 und Fig. 2 verwiesen.

Das Ausführungsbeispiel geht davon aus, dass im Empfänger eine Datenbank verfügbar ist, in der die Funkausbreitungsgegebenheiten hinsichtlich des Vorliegens oder Nichtvorliegens einer quasioptischen Sichtverbindung für Orte im Übertragungsgebiet die der Sender bzw. der Empfänger einnehmen können, hinterlegt sind. Die Datenbank enthält diese Information mit einer 1-Bit-Quantisierung pro Rasterpunkt im Übertragungsgebiet. Besteht für eine Kombination eines Senderortes $r_S$ und eines Empfängerortes $r_E$ eine quasioptische Sichtverbindung, so kann der Datenbank für diese Ortskombination bspw. für LOS($r_E$, $r_S$) = der Wert 1 entnommen werden. Besteht für dieselbe Ortskombination keine quasioptische Sichtverbindung, so würde die Datenbank für LOS($r_E,$ $r_S$) den Wert 0 enthalten. Der Abstand der Rasterpunkte im Übertragungsgebiet ist vorzugsweise abhängig von der Umgebung gewählt (bspw. für Gebäude, Stadt eine höhere Rasterauflösung als bei flachem Land) und hängt zudem von der Funksignalbandbreite zur Übertragung der Signale zwischen Sender (S) und Empfänger (E) ab.

Im Empfänger wird für jedes vom Sender (S) an den Empfänger (E) übermittelte Signal $Sig_S(k)$ ein aktueller Ort des Senders $r_S(k)$ und ein aktueller Ort des Empfängers $r_E(k)$ sowie eine Anzahl $g_1$ von prädizierten zukünftigen Orten des Senders (S) und des Empfängers (E) $r_{Sp}(k+1), r_{Sp}(k+2),..., r_{Sp}(k+g_1)$ und $r_{Ep}(k+1), r_{Ep}(k+2),..., r_{Ep}(k+g_1)$, ermittelt. Die Anzahl $g_1$ entspricht im Ausführungsbeispiel der Zahl zehn.

Weiterhin werden aus den aktuell ermittelten Orten des Senders bzw. des Empfängers: $r_S(k)$ bzw. $r_E(k)$ durch das Ermitteln der nächsten "aktuellen" Orte $r_S(k+1)$ und $r_E(k+1)$ bereits vergangene "aktuelle" Orte des Senders bzw. des Empfängers. Mit zunehmendem k entstehen somit zunehmend auch vergangene Orte des Senders (S) bzw. des Empfängers (E): $r_S(k-1), r_S(k-2),..., r_S(k-g_2)$ und $rE(k-1), rE(k-2),..., rE(k-g_2)$.

Die prädizierten zukünftigen Orte des Sender (S) bzw. des Empfängers (E): $r_{Sp}(k+1), r_{Sp}(k+2),..., r_{Sp}(k+g_1)$ und $r_{Ep}(k+1), r_{Ep}(k+2),..., r_{Ep}(k+g_1)$ werden vorliegend auf Basis der aktuellen sowie einer Anzahl $g_3$ bekannter vergangener Orte des Empfängers (E) und des Senders (S): $r_S(k), r_S(k-1), rS(k-2),..., r_S(k-g_3)$ und $r_E(k), r_E(k-1), r_E(k-2),..., r_E(k-g_3)$ extrapoliert. Im Empfänger sind somit vergangene, aktuelle und prädizierte zukünftige Orte des Senders bzw. des Empfängers bekannt.

Aus den im Empfänger bekannten vergangen, aktuellen und prädizierten Orten des Senders bzw. des Empfängers werden in diesem Ausführungsbeispiel für jedes aktuelle Digitalsignal $Sig_E(k)$, bspw. die Signallaufzeiten:

$t_{GLOS}(k-1)$: für die vergangenen Orte $r_S(k-1)$ bzw. $r_E(k-1)$,
$t_{GLOS}(k)$: für die aktuellen Orte $r_S(k)$ bzw. $r_E(k)$, und
$t_{GLOS}(k+1)$: für die prädizierten Orte $r_{Sp}(k+1)$ bzw. $r_{Ep}(k+1)$

bestimmt.

Dabei werden zunächst die Distanzen der jeweiligen vorstehenden Orte und anschließend durch Division mit der Lichtgeschwindigkeit c die entsprechenden Signallaufzeiten bestimmt .

Weiterhin werden in der Datenbank für die vorstehend bestimmten Ortspaare ($r_S(k-1)$ und $r_E(k-1)$, $r_S(k)$ und $r_E(k)$, $r_{Sp}(k)$ uns $r_{Ep}(k)$) die LOS-Werte : LOS(k-1), LOS(k) und LOS(k+1) bestimmt und somit ermittelt, ob eine quasioptische Sichtverbindung für die jeweiligen Ortspaare besteht oder nicht.

Basierend auf dem bekannten zeitlichen Abstand $t_a(k)$ der Signale $Sig(k)$ (im Ausführungsbeispiel: $t_a(k)=0$ für alle k), der Signallänge $t_p(k)$ (im vorliegenden Ausführungsbeispiel ist $t_p(k)$ konstant) und der im Digitalsignal $Sig_E(k)$ ermittelten Position $t_{sync}(k)$ des Synchronisationssignals p (k), wird nun eine Position $t_{sync}*(k+1)$ im Digitalsignal $Sig_E(k+1)$ bestimmt. Der Abschnitt A(k+1) im Digitalsignal $Sig_E(k+1)$ ergibt sich dabei aus zwei zu ermittelnden Werten $\Delta l_1(k+1)$ und $\Delta l_2(k+1)$ gemäß: A(k+1):= $[t_{sync}*(k+1) - \Delta l_1(k+1), t_{syne}*(k+1) + \Delta l_2(k+1)]$.

Für die Ermittlung der Werte $\Delta I_1(k+1)$ und $\Delta I_2(k+1)$ kann folgende Fallunterscheidung herangezogen werden.

a) Falls LOS(k-1), LOS(k) und LOS(k+1) = 1, dann gilt für

$$\Delta I_1(k+1) := \max(0, t_{GLOS}(k) - t_{GLOS}(k+1), t_{GLOS}(k) - t_{GLOS}(k-1)),$$

und

$$\Delta I_2(k+1) := \max(0, t_{GLOS}(k+1) - t_{GLOS}(k), t_{GLOS}(k-1) - t_{GLOS}(k))$$

b) Falls LOS(k-1) und LOS(k)= 1 und LOS (k+1) = 0, dann gilt:

$$\Delta I_1(k+1) := \max(0, t_{GLOS}(k) - t_{GLOS}(k-1)),$$

und

$$\Delta I_2(k+1) := \Delta t,$$

wobei $\Delta t$ ein konstanter Wert ist,

c) Falls LOS(k-1) = 0 und LOS(k) und LOS(k+1) = 1, dann gilt:

$$\Delta I_1(k+1) := \max(0, t_{GLOS}(k) - t_{GLOS}(k+1)),$$

und

$$\Delta I_2(k+1) := \Delta t,$$

wobei $\Delta t$ ein konstanter Wert ist, und

d) Sonst:

$$\Delta I_1(k+1) = \Delta t,$$

und

$$\Delta I_2(k+1) = \Delta t,$$

wobei $\Delta t$ ein konstanter Wert ist.

Die Suche des Synchronisationssignals p(k+1) erfolgt somit in einem gemäß der vorstehenden Fallunterscheidung ermittelten Abschnitt A(k+1):= [$t_{sync}^*(k+1) - \Delta I_1(k+1)$, $t_{sync}^*(k+1) + \Delta I_2(k+1)$], mittels Korrelationsanalyse.

Falls das Synchronisationssignals p(k+1) nicht in A(k+1) gefunden werden kann. Erfolgt die Suche in gesamten Digitalsignal $Sig_E(k+1)$.

**Patentansprüche**

1.  Verfahren zur Synchronisation eines Empfängers (E) auf einen Sender (S) in einem digitalen Funknetzwerk, wobei der Empfänger (E) und/oder der Sender (S) in einem Übertragungsgebiet mobil sind, vom Sender (S) in zeitlichem Abstand $t_a(k)$ digitale Signale $Sig_S(k)$ mit einer Signallänge $t_p(k)$ an den Empfänger (E) übermittelt werden, die jeweils ein bekanntes Synchronisationssignal $p(k)$ enthalten und nach dem Empfang im Empfänger (E) als Digitalsignal $Sig_E(k)$ vorliegen, und im Digitalsignal $Sig_E(k)$ in einem jeweils bestimmten Abschnitt A(k) eine Position $t_{Sync}(k)$ des Synchronisationssignals $p(k)$ gesucht wird, mit k = 1,2,3,...,
    **dadurch gekennzeichnet,**

    1.1. **dass** für jedes vom Sender (S) an den Empfänger (E) übermittelte Signal $Sig_S(k)$ ein aktueller Ort des Senders $r_S(k)$ und ein aktueller Ort des Empfängers $r_E(k)$ und/oder eine Anzahl $g_1$ von prädizierten zukünftigen Orten des Senders (S) und des Empfängers (E) $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$, ermittelt werden, und
    1.2. dass im Digitalsignal $Sig_E(k+1)$ der Abschnitt A(k+1) abhängig von:

    - der im Digitalsignal $Sig_E(k)$ ermittelten Position $t_{Sync}(k)$ des Synchronisationssignals $p(k)$, und
    - den aktuellen Orten des Senders (S) und des Empfängers (E): $r_S(k)$ und $r_E(k)$ oder einer daraus abgeleiteten Größe, und/oder den prädizierten zukünftigen Orten des Senders (S) und des Empfängers (E) $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$ oder daraus abgeleiteten Größen, und/oder von einer Anzahl $g_2$ von vergangenen Orten des Senders (S) und des Empfängers (E) $r_S(k-1)$, $r_S(k-2)$,..., $r_S(k-g_2)$ und rE(k-1), rE(k-2),..., rE(k-g_2) oder daraus abgeleiteten Größen, bestimmt werden.

2.  Verfahren gemäß Anspruch 1,
    **dadurch gekennzeichnet,**
    **dass** die Lage und/oder die Länge des Abschnitts A(k+1) in dem Digitalsignal $Sig_E(k+1)$ abhängig von Funkausbreitungsgegebenheiten zwischen den in 1.2. jeweils berücksichtigten, vergangenen, aktuellen und/oder prädizierten zukünftigen Orten des Senders (S) und des Empfänger (E): $r_S$, $r_E$ ermittelt werden, wobei die Funkausbreitungsgegebenheiten für alle möglichen Orte des Senders (S) und des Empfängers (E) im Übertragungsgebiet bekannt und in einer Datenbank hinterlegt sind.

3.  Verfahren gemäß Anspruch 1 oder 2,
    **dadurch gekennzeichnet,**
    **dass** der Empfänger (E) in einem Mobiltelefon, einem Auto, einem Flugzeug, oder einem Satelliten angeordnet ist.

4.  Verfahren gemäß einem der Ansprüche 1 bis 3,
    **dadurch gekennzeichnet,**
    **dass** der Sender (S) stationär ist.

5.  Verfahren gemäß einem der Ansprüche 1 bis 4,
    **dadurch gekennzeichnet,**
    **dass** für das erste vom Empfänger (E) empfangene Signal $Sig_S(k=1)$ der Abschnitt A(k=1) in dem das Synchronisationssignal $p(k=1)$ gesucht wird, das gesamte erste Digitalsignal $Sig_E(k=1)$ umfasst.

6.  Verfahren gemäß einem der Ansprüche 1 bis 6,
    **dadurch gekennzeichnet,**
    **dass** das Ermitteln eines Synchronisationssignals $p(k)$ durch Korrelation des Digitalsignals $Sig_E(k)$ im Abschnitt A(k) mit dem bekannten Synchronisationssignal $p(k)$ erfolgt.

7.  Verfahren gemäß einem der Ansprüche 1 bis 6,
    **dadurch gekennzeichnet,**
    **dass** die Schritte 1.1. und 1.2. vom Empfänger (E) ausgeführt werden.

8.  Verfahren gemäß einem der Ansprüche 1 bis 7,
    **dadurch gekennzeichnet,**

**dass** das Ermitteln der aktuellen Orte des Senders (S) und des Empfängers (E): $r_S(k)$, $r_E(k)$ auf Basis von im Sender (S) und im Empfänger (E) verfügbaren Satellitennavigationsdaten beruht.

9. Verfahren gemäß einem der Ansprüche 1 bis 8,
   **dadurch gekennzeichnet,**
   **dass** die prädizierten zukünftigen Orte des Sender (S) und/oder des Empfängers (E): $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$ auf Basis der aktuellen sowie einer Anzahl $g_3$ bekannter vergangener Orte des Empfängers (E) und des Senders (S): $r_S(k)$, $r_S(k-1)$, $rS(k-2)$,..., $r_S(k-g_3)$ und $r_E(k)$, $r_E(k-1)$, $r_E(k-2)$,..., $r_E(k-g_3)$ extrapoliert werden.

10. Verfahren gemäß einem der Ansprüche 1 bis 8,
    **dadurch gekennzeichnet,**
    **dass** die prädizierten zukünftigen Orte des Sender (S) und/oder des Empfängers (E): $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$ auf Basis bekannter in die Zukunft reichender Trajektorien des Empfängers (E) und des Senders (S) ermittelt werden.

11. Verfahren gemäß Anspruch 10,
    **dadurch gekennzeichnet,**
    **dass** die Trajektorien aus im Sender (S) und/oder im Empfänger (E) verfügbaren Navigations- oder Routendaten ermittelt werden.

12. Verfahren gemäß einem der Ansprüche 1 bis 11,
    **dadurch gekennzeichnet,**
    **dass** als abgeleitete Größe/Größen aus den in 1.2. ermittelten vergangenen, aktuellen und/oder prädizierten zukünftigen Orten des Senders (S) und des Empfänger (E) deren jeweilige Distanzen $d_{E,S} = |r_E-r_S|$ bei der Bestimmung des Abschnitts A(k+1) berücksichtigt werden.

13. Verfahren gemäß Anspruch 12,
    **dadurch gekennzeichnet,**
    **dass** als abgeleitete Größe/Größen eine aus den jeweiligen Distanzen $d_{E,S}$ ermittelte Signallaufzeit $t_{GLOS} = d_{E,S} / c$ zwischen Sender (S) und Empfänger (E) bei der Bestimmung des Abschnitts A(k+1) berücksichtigt werden, wobei c die Lichtgeschwindigkeit ist.

14. Verfahren gemäß einem der Ansprüche 2 bis 13,
    **dadurch gekennzeichnet,**
    **dass** der Datenbank entnommen werden kann, ob im Übertragungsgebiet zwischen einem möglichen Ort des Senders (S) und einem möglichen Ort des Empfängers (S) eine quasioptische Sichtverbindung besteht oder nicht.

15. Verfahren gemäß einem der Ansprüche 2 bis 14,
    **dadurch gekennzeichnet,**
    **dass** der Datenbank entnommen werden kann, welcher Wert der Lichtgeschwindigkeit c(k) für eine Funkausbreitung im Übertragungsgebiet zwischen einer möglichen Position des Senders (S) und einer möglichen Position des Empfängers (E) zugrunde zulegen ist.

16. Verfahren gemäß einem der Ansprüche 2 bis 15,
    **dadurch gekennzeichnet,**
    **dass** die für das Übertragungsgebiet in der Datenbank hinterlegten Funkausbreitungsgegebenheiten mit einer Auflösung angegeben sind, die einer Rasterung des Untersuchungsgebiets entsprechen.

17. Verfahren gemäß Anspruch 16,
    **dadurch gekennzeichnet,**
    **dass** die Rasterung im Übertragungsgebiet unterschiedlich ist.

18. Verfahren gemäß einem der Ansprüche 13 bis 17,
    **dadurch gekennzeichnet,**
    **dass** in Schritt 1.2. basierend auf dem bekannten zeitlichen Abstand $t_a(k)$ der Signale Sig(k), der Signallänge $t_p(k)$ und der im Digitalsignal $Sig_E(k)$ ermittelten Position $t_{sync}(k)$ des Synchronisationssignals p (k), eine Position $t_{sync}^*(k+1)$ im Digitalsignal $Sig_E(k+1)$ bestimmt wird, und sich der Abschnitt A(k+1) im Digitalsignal $Sig_E(k+1)$ aus zwei

zu ermittelnden Werten: $\Delta I_1(k+1)$ und $\Delta I_2(k+1)$ gemäß: $A(k+1) := [t_{sync}*(k+1) - \Delta I_1(k+1), t_{sync}*(k+1) + \Delta I_2(k+1)]$ ergibt.

**19.** Verfahren gemäß Anspruch 18,
**dadurch gekennzeichnet,**
**dass** die Position $t_{sync}*(k+1)$ gemäß: $t_{sync}*(k+1) = t_{sync}(k) + t_p(k)$ bestimmt wird, wobei der Sender (S) das Signal $Sig_S(k+1)$ direkt anschließend an das Signal $Sig_S(k)$ aussendet.

**20.** Verfahren gemäß Anspruch 18 oder 19,
**dadurch gekennzeichnet,**
**dass** die Werte für $\Delta I_1(k+1)$ und $\Delta I_2(k+1)$ unter Berücksichtigung einer Auswertung von Funkausbreitungsgegebenheiten und Unterschieden von ermittelten Signallaufzeiten $t_{GLOS}(k)$ für vergangene, aktuelle und/oder prädizierte zukünftige Positionen des Senders (S) und des Empfängers (E): $r_S$ und $r_E$ ermittelt werden.

**21.** Verfahren gemäß einem der Ansprüche 1 bis 20,
**dadurch gekennzeichnet,**
**dass** für den Fall, dass das Synchronisationssignal p(k+1) nicht innerhalb des Abschnitts A(k+1) ermittelt werden kann, das Synchronisationssignal im gesamten Digitalsignal $Sig_E(k+1)$ ermittelt wird.

**Geänderte Patentansprüche gemäss Regel 137(2) EPÜ.**

**1.** Verfahren zur Synchronisation eines Empfängers (E) auf einen Sender (S) in einem digitalen Funknetzwerk, wobei der Empfänger (E) und/oder der Sender (S) in einem Übertragungsgebiet mobil sind, vom Sender (S) in zeitlichem Abstand $t_a(k)$ digitale Signale $Sig_s(k)$ mit einer Signallänge $t_p(k)$ an den Empfänger (E) übermittelt werden, die jeweils ein bekanntes Synchronisationssignal p(k) enthalten und nach dem Empfang im Empfänger (E) als Digitalsignal $Sig_E(k)$ vorliegen, und im Digitalsignal $Sig_E(k)$ in einem jeweils bestimmten Abschnitt A(k) eine Position $t_{Sync}(k)$ des Synchronisationssignals p(k) gesucht wird, mit k = 1,2,3,...,
**dadurch gekennzeichnet,**

1.1. dass für jedes vom Sender (S) an den Empfänger (E) übermittelte Signal $Sig_S(k)$ ein aktueller Ort des Senders $r_S(k)$ und ein aktueller Ort des Empfängers $r_E(k)$ und/oder eine Anzahl $g_1$ von prädizierten zukünftigen Orten des Senders (S) und des Empfängers (E) $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$, ermittelt werden, und
1.2. dass im Digitalsignal $Sig_E(k+1)$ der Abschnitt A(k+1) abhängig von:

- der im Digitalsignal $Sig_E(k)$ ermittelten Position $t_{Sync}(k)$ des Synchronisationssignals p(k), und
- den aktuellen Orten des Senders (S) und des Empfängers (E): $r_S(k)$ und $r_E(k)$ oder einer daraus abgeleiteten Größe, und/oder den prädizierten zukünftigen Orten des Senders (S) und des Empfängers (E) $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$ oder daraus abgeleiteten Größen, und/oder von einer Anzahl $g_2$ von vergangenen Orten des Senders (S) und des Empfängers (E) $r_S(k-1)$, $r_S(k-2)$,..., $r_S(k-g_2)$ und $r_E(k-1)$, $r_E(k-2)$,..., $rE(k-g_2)$ oder daraus abgeleiteten Größen, bestimmt werden.

**2.** Verfahren gemäß Anspruch 1,
**dadurch gekennzeichnet,**
**dass** die Lage und/oder die Länge des Abschnitts A(k+1) in dem Digitalsignal $Sig_E(k+1)$ abhängig von Funkausbreitungsgegebenheiten zwischen den in 1.2. jeweils berücksichtigten, vergangenen, aktuellen und/oder prädizierten zukünftigen Orten des Senders (S) und des Empfänger (E): $r_S$, $r_E$ ermittelt werden, wobei die Funkausbreitungsgegebenheiten für alle möglichen Orte des Senders (S) und des Empfängers (E) im Übertragungsgebiet bekannt und in einer Datenbank hinterlegt sind.

**3.** Verfahren gemäß Anspruch 1 oder 2,
**dadurch gekennzeichnet,**
**dass** der Empfänger (E) in einem Mobiltelefon, einem Auto, einem Flugzeug, oder einem Satelliten angeordnet ist.

**4.** Verfahren gemäß einem der Ansprüche 1 bis 3,
**dadurch gekennzeichnet,**
**dass** der Sender (S) stationär ist.

**5.** Verfahren gemäß einem der Ansprüche 1 bis 4,
**dadurch gekennzeichnet,**
**dass** für das erste vom Empfänger (E) empfangene Signal $Sig_S(k=1)$ der Abschnitt $A(k=1)$ in dem das Synchronisationssignal $p(k=1)$ gesucht wird, das gesamte erste Digitalsignal $Sig_E(k=1)$ umfasst.

**6.** Verfahren gemäß einem der Ansprüche 1 bis 6,
**dadurch gekennzeichnet,**
**dass** das Ermitteln eines Synchronisationssignals $p(k)$ durch Korrelation des Digitalsignals $Sig_E(k)$ im Abschnitt $A(k)$ mit dem bekannten Synchronisationssignal $p(k)$ erfolgt.

**7.** Verfahren gemäß einem der Ansprüche 1 bis 6,
**dadurch gekennzeichnet,**
**dass** die Schritte 1.1. und 1.2. vom Empfänger (E) ausgeführt werden.

**8.** Verfahren gemäß einem der Ansprüche 1 bis 7,
**dadurch gekennzeichnet,**
**dass** das Ermitteln der aktuellen Orte des Senders (S) und des Empfängers (E): $r_S(k)$, $r_E(k)$ auf Basis von im Sender (S) und im Empfänger (E) verfügbaren Satellitennavigationsdaten beruht.

**9.** Verfahren gemäß einem der Ansprüche 1 bis 8,
**dadurch gekennzeichnet,**
**dass** die prädizierten zukünftigen Orte des Sender (S) und/oder des Empfängers (E) : $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$ auf Basis der aktuellen sowie einer Anzahl $g_3$ bekannter vergangener Orte des Empfängers (E) und des Senders (S): $r_S(k)$, $r_S(k-1)$, $rS(k-2)$,..., $r_S(k-g_3)$ und $r_E(k)$, $r_E(k-1)$, $r_E(k-2)$,..., $r_E(k-g_3)$ extrapoliert werden.

**10.** Verfahren gemäß einem der Ansprüche 1 bis 8,
**dadurch gekennzeichnet,**
**dass** die prädizierten zukünftigen Orte des Sender (S) und/oder des Empfängers (E): $r_{Sp}(k+1)$, $r_{Sp}(k+2)$,..., $r_{Sp}(k+g_1)$ und $r_{Ep}(k+1)$, $r_{Ep}(k+2)$,..., $r_{Ep}(k+g_1)$ auf Basis bekannter in die Zukunft reichender Trajektorien des Empfängers (E) und des Senders (S) ermittelt werden.

**11.** Verfahren gemäß Anspruch 10,
**dadurch gekennzeichnet,**
**dass** die Trajektorien aus im Sender (S) und/oder im Empfänger (E) verfügbaren Navigations- oder Routendaten ermittelt werden.

**12.** Verfahren gemäß einem der Ansprüche 1 bis 11,
**dadurch gekennzeichnet,**
**dass** als abgeleitete Größe/Größen aus den in 1.2. ermittelten vergangenen, aktuellen und/oder prädizierten zukünftigen Orten des Senders (S) und des Empfänger (E) deren jeweilige Distanzen $d_{E,S} = |r_E - r_S|$ bei der Bestimmung des Abschnitts $A(k+1)$ berücksichtigt werden.

**13.** Verfahren gemäß Anspruch 12,
**dadurch gekennzeichnet,**
**dass** als abgeleitete Größe/Größen eine aus den jeweiligen Distanzen $d_{E,S}$ ermittelte Signallaufzeit $t_{GLOS} = d_{E,S} / c$ zwischen Sender (S) und Empfänger (E) bei der Bestimmung des Abschnitts $A(k+1)$ berücksichtigt werden, wobei $c$ die Lichtgeschwindigkeit ist.

**14.** Verfahren gemäß Anspruch 2,
**dadurch gekennzeichnet,**
**dass** der Datenbank entnommen werden kann, ob im Übertragungsgebiet zwischen einem möglichen Ort des Senders (S) und einem möglichen Ort des Empfängers (S) eine quasioptische Sichtverbindung besteht oder nicht.

**15.** Verfahren gemäß einem der Ansprüche 2 oder 14,
**dadurch gekennzeichnet,**
**dass** der Datenbank entnommen werden kann, welcher Wert der Lichtgeschwindigkeit $c(k)$ für eine Funkausbreitung im Übertragungsgebiet zwischen einer möglichen Position des Senders (S) und einer möglichen Position des Empfängers (E) zugrunde zulegen ist.

**16.** Verfahren gemäß einem der Ansprüche 2, 14 oder 15,
**dadurch gekennzeichnet,**
**dass** die für das Übertragungsgebiet in der Datenbank hinterlegten Funkausbreitungsgegebenheiten mit einer Auflösung angegeben sind, die einer Rasterung des Untersuchungsgebiets entsprechen.

**17.** Verfahren gemäß Anspruch 16,
**dadurch gekennzeichnet,**
**dass** die Rasterung im Übertragungsgebiet unterschiedlich ist.

**18.** Verfahren gemäß einem der Ansprüche 13 bis 17,
**dadurch gekennzeichnet,**
**dass** in Schritt 1.2. basierend auf dem bekannten zeitlichen Abstand $t_a(k)$ der Signale Sig(k), der Signallänge $t_p(k)$ und der im Digitalsignal $Sig_E(k)$ ermittelten Position $t_{sync}(k)$ des Synchronisationssignals p (k), eine Position $t_{sync}^*(k+1)$ im Digitalsignal $Sig_E(k+1)$ bestimmt wird, und sich der Abschnitt A(k+1) im Digitalsignal $Sig_E(k+1)$ aus zwei zu ermitelnden Werten: $\Delta l_1(k+1)$ und $\Delta l_2(k+1)$ gemäß: A(k+1): $[t_{sync}^*(k+1) - \Delta l_1(k+1), t_{sync}^*(k+1) + \Delta l_2(k+1)]$ ergibt.

**19.** Verfahren gemäß Anspruch 18,
**dadurch gekennzeichnet,**
**dass** die Position $t_{sync}^*(k+1)$ gemäß: $t_{sync}^*(k+1) = t_{sync}(k) + t_p(k)$ bestimmt wird, wobei der Sender (S) das Signal $Sig_S(k+1)$ direkt anschließend an das Signal $Sig_S(k)$ aussendet.

**20.** Verfahren gemäß Anspruch 18 oder 19,
**dadurch gekennzeichnet,**
**dass** die Werte für $\Delta l_1(k+1)$ und $\Delta l_2(k+1)$ unter Berücksichtigung einer Auswertung von Funkausbreitungsgegebenheiten und Unterschieden von ermittelten Signallaufzeiten $t_{GLOS}(k)$ für vergangene, aktuelle und/oder prädizierte zukünftige Positionen des Senders (S) und des Empfängers (E): $r_S$ und $r_E$ ermittelt werden.

**21.** Verfahren gemäß einem der Ansprüche 1 bis 20,
**dadurch gekennzeichnet,**
**dass** für den Fall, dass das Synchronisationssignal p(k+1) nicht innerhalb des Abschnitts A(k+1) ermittelt werden kann, das Synchronisationssignal im gesamten Digitalsignal $Sig_E(k+1)$ ermittelt wird.

$t_p\,(k)$

p(k=1)

$\mathrm{Sig_S}(k{=}1)$

$t_{sync}(k{=}0)$

$t_{GLOS}(k{=}1)$

p(k=1)

$\mathrm{Sig_E}(k{=}1)$

$t_{sync}(k{=}1)$

$t_{index} = 0$

Zeitindex

## Fig. 1 (Stand der Technik)

$t_p\,(k)$

p(k=1)

$\mathrm{Sig_S}(k{=}1)$

$t_{sync}(k{=}0)$

$t_{GLOS}(k{=}1)$

p(k=1)

$\mathrm{Sig_E}(k{=}1)$

$t_{sync}(k{=}1)$

$t_{GLOS}(k{=}2)$

p(k=2)

$\mathrm{Sig_E}(k{=}2)$

$- \Delta t$

$+ \Delta t$

A(k=2)

$t_{index} = 0$

$t_{sync}(k{=}2)$  $t_{sync}^*(k{=}2)$     Zeitindex

## Fig. 2 (Stand der Technik)

Fig. 3

Europäisches
Patentamt

European
Patent Office

Office européen
des brevets

**EUROPÄISCHER RECHERCHENBERICHT**

Nummer der Anmeldung

EP 09 01 5928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 877 506 A2 (KOKUSAI DENSHIN DENWA CO LTD [JP]) 11. November 1998 (1998-11-11) * Zusammenfassung; Ansprüche 1,2,5,6; Abbildungen 2-5,6a,6b,7,8 * * Spalte 2, Zeile 13 - Spalte 6, Zeile 17 * | 1-21 | INV. H04L7/02 H04L7/04 ADD. H04L7/00 H04W64/00 |
| A | ----- US 6 091 786 A (CHEN WEIZHONG [US] ET AL) 18. Juli 2000 (2000-07-18) * Zusammenfassung; Abbildungen 1,3,4 * * Spalte 2, Zeile 50 - Spalte 3, Zeile 10 * * Spalte 3, Zeile 46 - Spalte 4, Zeile 22 * | 1-21 | |
| A | ----- EP 0 996 237 A1 (LUCENT TECHNOLOGIES INC [US]) 26. April 2000 (2000-04-26) * Zusammenfassung; Ansprüche 1,2,5; Abbildungen 1b,4,5 * * Seiten 11-13,17 * | 1-21 | |
| A | ----- DE 10 2004 059957 A1 (FRAUNHOFER GES FORSCHUNG [DE]) 14. Juni 2006 (2006-06-14) * Zusammenfassung; Ansprüche 1,2,25; Abbildungen 1,2,4 * * Absätze [0054], [0055], [0057], [0059], [0065] - [0067], [0074], [0094] - [0100] * | 1-21 | RECHERCHIERTE SACHGEBIETE (IPC) H04L H04W |
| A | ----- US 6 874 037 B1 (ABRAM PHILIP MICHAEL [US] ET AL) 29. März 2005 (2005-03-29) * Zusammenfassung; Ansprüche 1,8; Abbildung 4 * * Spalte 1, Zeile 49 - Spalte 2, Zeile 40 * ----- | 1-21 | |

Der vorliegende Recherchenbericht wurde für alle Patentansprüche erstellt

| Recherchenort | Abschlußdatum der Recherche | Prüfer |
|---|---|---|
| München | 31. März 2010 | Wolters, Robert |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 5928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2010

| Im Recherchenbericht angeführtes Patentdokument | Datum der Veröffentlichung | Mitglied(er) der Patentfamilie | Datum der Veröffentlichung |
|---|---|---|---|
| EP 0877506 A2 | 11-11-1998 | JP 3412448 B2<br>JP 10308730 A<br>US 6154506 A | 03-06-2003<br>17-11-1998<br>28-11-2000 |
| US 6091786 A | 18-07-2000 | KEINE | |
| EP 0996237 A1 | 26-04-2000 | AU 725798 B2<br>AU 5356899 A<br>BR 9904709 A<br>CA 2281354 A1<br>CN 1251482 A<br>DE 69821487 D1<br>DE 69821487 T2<br>JP 4301475 B2<br>JP 2000188565 A<br>KR 20000035016 A<br>US 6724837 B1 | 19-10-2000<br>20-04-2000<br>12-09-2000<br>19-04-2000<br>26-04-2000<br>11-03-2004<br>25-11-2004<br>22-07-2009<br>04-07-2000<br>26-06-2000<br>20-04-2004 |
| DE 102004059957 A1 | 14-06-2006 | AT 435429 T<br>AU 2005315819 A1<br>AU 2005315887 A1<br>CN 101116006 A<br>CN 101116280 A<br>EP 1825631 A1<br>EP 1825291 A1<br>WO 2006063769 A1<br>WO 2006063790 A1<br>ES 2329066 T3<br>JP 2008523750 T<br>JP 2008523400 T<br>US 2006165200 A1<br>US 2008012768 A1 | 15-07-2009<br>22-06-2006<br>22-06-2006<br>30-01-2008<br>30-01-2008<br>29-08-2007<br>29-08-2007<br>22-06-2006<br>22-06-2006<br>20-11-2009<br>03-07-2008<br>03-07-2008<br>27-07-2006<br>17-01-2008 |
| US 6874037 B1 | 29-03-2005 | KEINE | |

EPO FORM P0461

Für nähere Einzelheiten zu diesem Anhang : siehe Amtsblatt des Europäischen Patentamts, Nr.12/82